# EUROPÄISCHE PATENTANMELDUNG

(11) **EP 1 719 411 A2**
(43) Veröffentlichungstag der Anmeldung: **08.11.2006**
(21) Anmeldenummer: 06112306.3
(22) Anmeldetag: 06.04.2006
(51) Int. Cl.: A21B 1/46, A21B 3/07, A21B 7/00

(54) **Automatische Backvorrichtung**

(30) Priorität: 11.04.2005 DE 102005016769; 11.04.2005 DE 102005016772
(71) Anmelder: MIWE Michael Wenz GmbH, 97450 Arnstein (DE)
(72) Erfinder: Engelhardt, Dieter, 97836, Bischbrunn (DE); Leppich, Peter, 97450, Arnstein (DE); Kleinschnitz, Thomas, 97834, Birkenfeld (DE); Hammer, Jochen, 97440, Werneck (DE)
(74) Vertreter: Patentanwälte Freischem

(57) **Zusammenfassung**

Die Erfindung betrifft ein Verfahren zur Steuerung einer automatischen Backvorrichtung in einem Verkaufsgeschäft, mit einem Backofen, einer Zufuhrvorrichtung für die Zufuhr von Backrohlingen und einer Transportvorrichtung für den Transport der Backrohlinge von der Zufuhrvorrichtung durch den Innenraum des Backofens zu einer Abgabestation, an der die fertigen Backwaren für Kunden bereitgestellt werden.

Aufgabe der vorliegenden Erfindung ist es, die Füllstandsregelung für die Abgabestation mit in dem Verkaufsgeschäft vorhandenen Einrichtungen durchzuführen.

Diese Aufgabe wird erfindungsgemäß dadurch gelöst, daß eine Datenverarbeitungseinheit die Menge der bereitgestellten Backwaren erfaßt und über ein Datennetz von dem Kassensystem des Verkaufsgeschäfts die Anzahl der verkauften Backwaren empfängt und durch Vergleich dieser Werte ein Nachbacken durch die Backvorrichtung veranlaßt.

## Beschreibung

### Technisches Gebiet

Die Erfindung betrifft ein Verfahren zur Steuerung einer automatischen Backvorrichtung in einem Verkaufsgeschäft, mit einem Backofen, einer Zufuhrvorrichtung für die Zufuhr von Backrohlingen und einer Transportvorrichtung für den Transport der Backrohlinge von der Zufuhrvorrichtung durch den Innenraum des Backofens zu einer Abgabestation, an der die fertigen Backwaren für Kunden bereitgestellt werden.

### Stand der Technik

Ein derartiges Verfahren geht z.B. aus dem Dokument EP 1 433 381 A1 hervor. Hier werden Füllstandsdetektoren vorgeschlagen, die zur Regelung des Füllstands der Abgabestation eingesetzt werden. Es wird vorgeschlagen den Backvorgang fortzusetzen, bis die Füllstandserkennung ein definiertes Schaltniveau erreicht hat.

Derartige Füllstandsdetektoren erfordern zusätzliche Sensorik in der Backvorrichtung, die fehleranfällig sein kann.

### Darstellung der Erfindung

Aufgabe der vorliegenden Erfindung ist es, die Füllstandsregelung für die Abgabestation mit in dem Verkaufsgeschäft vorhandenen Einrichtungen durchzuführen.

Diese Aufgabe wird erfindungsgemäß dadurch gelöst, daß eine Datenverarbeitungseinheit die Menge der bereitgestellten Backwaren erfaßt und über ein Datennetz von dem Kassensystem des Verkaufsgeschäfts die Anzahl der verkauften Backwaren empfängt und durch Vergleich dieser Werte ein Nachbacken durch die Backvorrichtung veranlaßt.

Eine in der Backvorrichtung vorgesehene Datenverarbeitungseinheit, beispielsweise eine digitale Steuerungseinheit erfaßt also die Menge der hergestellten Backwaren. Dies ist ohne großen Aufwand z.B. durch Erfassen der von der Zufuhrvorrichtung zugeführten Backrohlinge möglich. Die Zufuhrvorrichtung gibt z.B. einzelne Chargen mit einer festgelegten Anzahl Backrohlinge ab. Jede Aktivierung der Zufuhrvorrichtung entspricht somit einer Fertigstellung eben dieser Anzahl von Backwaren. Die Zufuhrvorrichtung wird bevorzugt auch mittels der digitalen Steuerungseinheit aktiviert, so daß die Abspeicherung der Anzahl der Aktivierungsvorgänge unmittelbar auf die Anzahl der bereitgestellten Backwaren schließen läßt.

Die Datenverarbeitungseinheit der Backvorrichtung wird gemäß der Erfindung mit einem in dem Verkaufsgeschäft vorhandenen Kassensystem gekoppelt. Moderne Kassensysteme erfassen exakt die Mengen der einzelnen verkauften Waren, z.B. mittels eindeutig zugeordneten Artikelnummern. Durch Vergleich der bereitgestellten Backwaren mit den abverkauften Backwaren kann die Differenz zwischen der Anzahl der bereitgestellten Backwaren und der Anzahl der verkauften Backwaren bestimmt werden. Hieraus ergibt sich die Anzahl der Backwaren, die sich noch im Verkaufsgeschäft befindet. Dieser Wert kann verwendet werden, um ein Nachbacken von Backwaren durch die automatische Backvorrichtung auszulösen.

Hierzu kann zum Beispiel ein Signal erzeugt werden, welches von dem Personal des Verkaufgeschäftes wahrgenommen wird. Das Personal aktiviert daraufhin die Backvorrichtung und veranlaßt beispielsweise das Nachbacken einer weiteren Charge mit einer vorbestimmten Anzahl der Backwaren.

Alternativ kann das Signal über Datenleitungen unmittelbar an die Backvorrichtung weitergeleitet werden, welche dann automatisch das Nachbacken einer bestimmten Charge veranlaßt.

In einer einfachen Einstellung des genannten Steuerungsverfahrens kann das Nachbacken veranlaßt werden, wenn die Anzahl der verkauften Backwaren der Anzahl der bereitgestellten Backwaren entspricht. Diese Einstellung kann beispielsweise gewählt werden, wenn die Backvorrichtung mit einem Ausgabeautomaten und einem Bezahlautomaten für die Backwaren gekoppelt ist. An einem derartigen Ausgabe- und Bezahlautomaten können sich die Kunden nach Durchführung eines Bezahlvorgangs (mit einer Kreditkarte oder durch Einwerfen von Bargeld) direkt die Backwaren ausgeben lassen. Sobald die letzte Backware abverkauft ist, wird ein neuer Backvorgang ausgelöst. Diese Einstellung hat allerdings den Nachteil, daß der nächste Kunde darauf warten muß, daß die Backrohlinge den Backofen durchlaufen.

In der Praxis kann daher das Nachbacken veranlaßt werden, wenn die Anzahl der verkauften Backwaren um einen bestimmten Schwellenwert kleiner ist als die Anzahl der bereitgestellten Backwaren. Das Nachbacken wird folglich zu einem Zeitpunkt veranlaßt, an dem in der Abgabestation noch Backwaren vorhanden sind. Auf diese Weise kann eine kontinuierliche Bereitstellung der Backwaren sichergestellt werden.

Dabei kann die Datenverarbeitungseinheit die Verkaufsgeschwindigkeit der Backwaren berücksichtigen. In aller Regel sind moderne Kassensysteme auch mit einer Zeitmeßvorrichtung versehen. Neben der Anzahl und Art der abverkauften Waren werden die Zeitpunkte der einzelnen Abverkaufsvorgänge erfaßt. Aus diesen Daten läßt sich jeweils die aktuelle Verkaufsgeschwindigkeit, das heißt die Anzahl der verkauften Backwaren pro Zeiteinheit ermitteln. Die Verkaufsgeschwindigkeit kann bei dem erfindungsgemäßen Verfahren berücksichtigt werden. Wenn beispielsweise ein Nachbackvorgang zehn Minuten in Anspruch nimmt, kann durch Multiplikation dieses Zeitraums mit der aktuellen Verkaufsgeschwindigkeit vorhergesagt werden, wieviel Backwaren während des Zeitraums des Nachbackens abverkauft werden. Die ermittelte Anzahl entspricht dann dem mindestens zu wählenden Schwellenwert. Gegebenenfalls kann noch eine Sicherheitsmarge auf diese Anzahl addiert werden, damit die kontinuierliche Verfügbarkeit der Backwaren sichergestellt ist.

Moderne Überwachungssysteme für Supermärkte erfassen häufig nicht nur als Kassensystem die Verkaufsdaten, sondern auch über Personenzählvorrichtungen Informationen über die Anzahl der in einem Verkaufsgeschäft befindlichen Kunden. Diese Anzahl wird beispielsweise für die Besetzung der Kassen des Verkaufsgeschäfts verwendet. Bei geringem Kundenaufkommen wird beispielsweise nur eine Kasse besetzt, wogegen bei hohem Kundenaufkommen mehrere Kassen besetzt werden.

Die Anzahl der in dem Verkaufsgeschäft befindlichen Kunden kann ebenfalls zur Bestimmung des Schwellenwerts berücksichtigt werden. In einem Supermarkt benötigt ein Kunde eine bestimmte Zeit, um von einem Regal oder einer sonstigen Abgabestation von Waren bis zur Kasse zu gelangen. Während dieser Zeit hat er die entnommenen Waren in seinem Einkaufswagen. Die Waren wurden noch nicht vom Kassensystem des Verkaufsgeschäfts erfaßt. Wenn eine große Anzahl von Kunden sich im Verkaufsgeschäft befindet, befindet sich zwangsläufig auch eine große Anzahl von Artikeln, darunter auch die genannten Backwaren in den Einkaufswagen, ohne von der Kasse erfaßt worden zu sein. Bei großem Kundenaufkommen ist daher der Schwellenwert höher einzustellen als bei niedrigem Kundenaufkommen.

Zusätzlich zu den vorgeschlagenen automatischen Festlegungsverfahren für den Schwellenwert kann der Schwellenwert auch manuell durch das Verkaufs-personal aufgrund eigener Erfahrungswerte und Beobachtungen eingegeben werden.

Das erfindungsgemäße Verfahren kann auch für eine komplexe Backvorrichtung angewendet werden, bei der die Zufuhrvorrichtung mehrere verschiedene Waren dem Backofen zuführt. Bei dieser Ausführungsform erfaßt die Datenverarbeitungseinheit die Menge jeder der verschiedenen bereitgestellten Backwaren und empfängt über ein Datennetz von dem Kassensystem des Verkaufsgeschäfts die Anzahl jeder der verschiedenen verkauften Backwaren. Für jede der Backwaren wird dann unter Berücksichtigung eines Schwellenwertes und der oben genannten Faktoren ein Nachbacken durch die Backvorrichtung veranlaßt.

Folglich ist die Erfindung ebenfalls auf eine automatische Backvorrichtung für ein Verkaufsgeschäft gerichtet, welche einen Backofen, eine Zufuhrvorrichtung für die Zufuhr von Backrohlingen und eine Transportvorrichtung für den Transport der Backrohlinge von der Zufuhrvorrichtung durch den Innenraum des Backofens zu einer Abgabestation umfaßt, an der die fertigen Backwaren für die Entnahme durch Kunden bereitgestellt werden.

Gemäß der Erfindung weist die automatische Backvorrichtung eine Datenverarbeitungseinheit mit einer Datenschnittstelle für den Austausch von Daten mit einem Kassensystem des Verkaufsgeschäfts auf.

Automatische Backstationen sind üblicherweise für große Verkaufsgeschäfte mit mehreren Registrierkassen bestimmt. Die Registrierkassen sind zu einem Kassensystem mit zentraler Datenerfassung und Datenverwaltung zusammengefaßt. Das Kassensystem weist üblicherweise einen Steuerungsrechner auf, der über die erforderlichen Datenverarbeitungseinheiten (CPU, Arbeitsspeicher und Massenspeicher, wie Festplatten) verfügt.

Die Datenverarbeitungseinheit der automatischen Backvorrichtung muß nicht zwangsläufig in der Nähe des Backofens angeordnet sein. Es ist auch möglich, daß die Datenverarbeitungseinheit entfernt von dem Backofen angeordnet ist. Die Steuerungsaufgaben für die Backvorrichtung kann auch von einem Rechner des Kassensystems durchgeführt werden. Entscheidend ist, daß die Datenerfassung des Kassensystems mit dem Steuerungsrechner für die automatische Backvorrichtung gekoppelt wird.

Wenn der Nachbackvorgang durch das Verkaufspersonal ausgelöst wird, umfaßt die Backvorrichtung ein Signalmittel. Dieses kann am Backofen und/oder an mindestens einer Registrierkasse und/oder in einem tragbaren Modul angeordnet sein.

Ebenfalls umfaßt die Backvorrichtung Eingabemittel für Steuerbefehle. Auch diese können am Backofen, an der Registrierkasse und/oder in einem tragbaren Modul angeordnet sein.

Bei der Anordnung der Signalmittel und der Eingabemittel an dem Backofen kann das Verkaufspersonal durch visuelle Überprüfung den ordnungsgemäßen Zustand des Backofens und der Backvorrichtung überprüfen.

Die Anordnung des Signalmittels und der Eingabevorrichtung an der Registrierkasse hat den Vorteil, daß eine Verkäuferin, die gerade mit dem Kassieren beschäftigt ist, die notwendigen Steuerbefehle eingeben kann, ohne ihren Arbeitsplatz zu verlassen.

Ein tragbares Modul für die Wiedergabe der Signale und die Übertragung von Steuerbefehlen führt zu einer sehr großen Flexibilität. Ein tragbares Modul kann beispielsweise mittels Funk eine Datenverbindung mit der Datenverarbeitungseinheit der Backvorrichtung aufbauen. Über Warnleuchten, eine Bildschirmanzeige oder auch ein Vibrationsmittel kann ein Signal erzeugt werden, welches den Träger dieses tragbaren Geräts darauf hinweist, daß eine Eingabe erforderlich ist. Die Eingabe kann durch beliebige Eingabemittel (Tastatur, Touchscreen etc.) erfolgen. Die eingegebenen Befehle werden über die Funk-Datenverbindung an die Backvorrichtung übertragen.

Die Person, welche die Backvorrichtung bedient, ist durch Funkmodul ortsungebunden und kann an jeder Stelle in dem Verkaufsgeschäft die Signale wahrnehmen und die Steuerbefehle eingeben. Signalmittel und Eingabemittel können dabei eine Einheit innerhalb eines gemeinsamen Gehäuses bilden.

Eine weitere Aufgabe der vorliegenden Erfindung ist die Schaffung eines einfachen und zuverlässigen Steuerungsverfahren für den Betrieb einer automatischen Backvorrichtung.

Diese Aufgabe wird erfindungsgemäß dadurch gelöst, daß die Backvorrichtung über eine Steuerungseinheit programmiert wird, so daß sie zu einem bestimmten Zeitpunkt dazu veranlaßt wird, eine bestimmte Menge mindestens einer bestimmen Backware zu backen und in der Abgabestation bereitzustellen.

Diese Programmierung kann in Verbindung mit der oben beschriebenen Datenkopplung mit dem Kassensystem oder unabhängig hiervon erfolgen.

Das feste Vorprogrammieren der Bereitstellung bestimmter Chargen hat den Vorteil, daß die Backvorrichtung mit sehr einfachen und robusten Zufuhrmitteln betrieben werden kann, die die Backrohlinge chargenweise abgeben. Außerdem erfordert es nicht die komplexe Sensorik und Steuerungselektronik, die zur konstanten Füllstandsüberwachung erforderlich ist.

In der Praxis kann die Zufuhrvorrichtung für die Zufuhr mehrerer verschiedener Backwaren ausgelegt sein, die nach dem Durchlaufen des Backofens in verschiedenen Sektionen der Abgabestation bereitgestellt werden. Dabei kann die Steuerungseinheit derart programmiert werden, daß die Backvorrichtung jeweils bestimmte Mengen der verschiedenen Backwaren bäckt und in den jeweiligen verschiedenen Sektionen der Abgabestation bereitstellt.

Es können gemäß dem Verfahren der Erfindung Zufuhrvorrichtungen zur Einzelzufuhr mit Zufuhrvorrichtungen mit chargenweiser Zufuhr kombiniert werden. Die Abfrage der Backrohlinge aus den verschiedenen Zufuhrvorrichtungen erfolgt gemäß den vorgegebenen Mengen an herzustellenden Backwaren.

Die Erfindung ermöglicht insbesondere die Durchführung eines Nachtbackprogramms. Bisher war es bei professionellen Backöfen möglich, die Einschaltzeit vorzuprogrammieren. Die Backöfen wurden z.B. 30 Minuten vor der Öffnung der Backstube angeschaltet, so daß sie beim Eintreffen des Personals vorgeheizt und einsatzbereit waren und keine unnötigen Wartezeiten entstanden. Gemäß dem erfindungsgemäßen Verfahren ist es bei Verwendung einer automatischen Ladenbackstation möglich, den vollständigen Backvorgang, einschließlich Vorheizen des Ofens, Zufuhr der Backrohlinge und deren Transport von der Zufuhrvorrichtung durch den Innenraum des Backofens zur Abgabestation abzuschließen, bevor das Verkaufsgeschäft geöffnet wird. Der Zeitpunkt für den Beginn des Backvorgangs wird um einen bestimmten Zeitraum vor der Öffnung des Verkaufsgeschäfts gewählt, so daß bis zur Öffnung des Verkaufsgeschäfts die bestimmte(n) Menge(n) einer oder mehrerer Backware(n) in der Abgabestation bereitstellt sind.

Für das Backen von Backrohlingen in automatischen Backstationen eignen sich insbesondere tiefgefrorene Backrohlinge, die nach der Entnahme aus dem Kühlraum noch über einen Zeitraum von 48 Stunden verarbeitet werden können. Es bereitet daher keine Probleme, die Backrohlinge am Abend des Geschäftsschlusses in die Zufuhrvorrichtung einzufüllen und die Steuerungseinheit so zu programmieren, daß am nächsten Morgen die Backrohlinge dem vorgegebenen Backprogramm folgend gebacken werden. Selbst wenn ein Tag, an dem das Geschäft geschlossen ist, zwischen dem Einfüllen der Backrohlinge und der Geschäftsöffnung liegt, sind die Backrohlinge bei Beginn des Backvorgangs noch verarbeitbar.

In der Steuerungseinheit können festgelegte oder dynamisch bestimmte Kombinationen von Mengenangaben für die verschiedenen Backwaren abgespeichert werden. Z.B. kann der Hersteller eine sinnvolle und häufig verwendete Kombination vorgeben. Beispielsweise werden siebzig normale Brötchen, 35 Vollkornbrötchen und zwölf Baguettes vorgegeben. Diese Kombination braucht nicht manuell eingegeben zu werden, sondern kann durch einen Tastendruck aktiviert werden.

Die Steuerungseinheit kann auch die jeweils abgerufene Kombination von Mengenangaben für die verschiedenen Backwaren in der Steuerungseinheit abspeichern und statistisch auswerten. Die am häufigsten verwendeten Kombinationen können dann ebenfalls über Funktionstasten mit einem einzigen Knopfdruck aktiviert werden.

Zusätzlich kann die durchschnittlich gewählte Kombination von Mengenangaben für die verschiedenen Backwaren über die Steuerungseinheit durch eine Funktionstaste abrufbar sein.

Die vor der Öffnung des Verkaufsgeschäfts gewählten Kombinationen können getrennt berücksichtigt werden, so daß auch hier die häufigste oder durchschnittliche Kombination von Mengenangaben für die verschiedenen Backwaren über die Steuerungseinheit über eine Schnelleingabe oder eine Funktionstaste abrufbar ist.

### Kurze Beschreibung der Zeichnungen

Nachfolgend werden Ausführungsformen der Erfindung unter Bezugnahme auf die beigefügten Zeichnungen beschrieben. Die Zeichnungen zeigen in:
- Fig. 1: eine schematische Seitenansicht einer erfindungsgemäßen Backvorrichtung,
- Fig. 2: eine schaubildliche Darstellung eines Kassensystems gemäß der Erfindung,
- Fig. 3: eine Draufsicht auf ein Funkmodul,
- Fig. 4: eine Seitenansicht des geschlossenen Gehäuses der Backvorrichtung und
- Fig. 5: eine vergrößerte Darstellung eines
Eingabebildschirm der Backvorrichtung.

### Weg(e) zur Ausführung der Erfindung

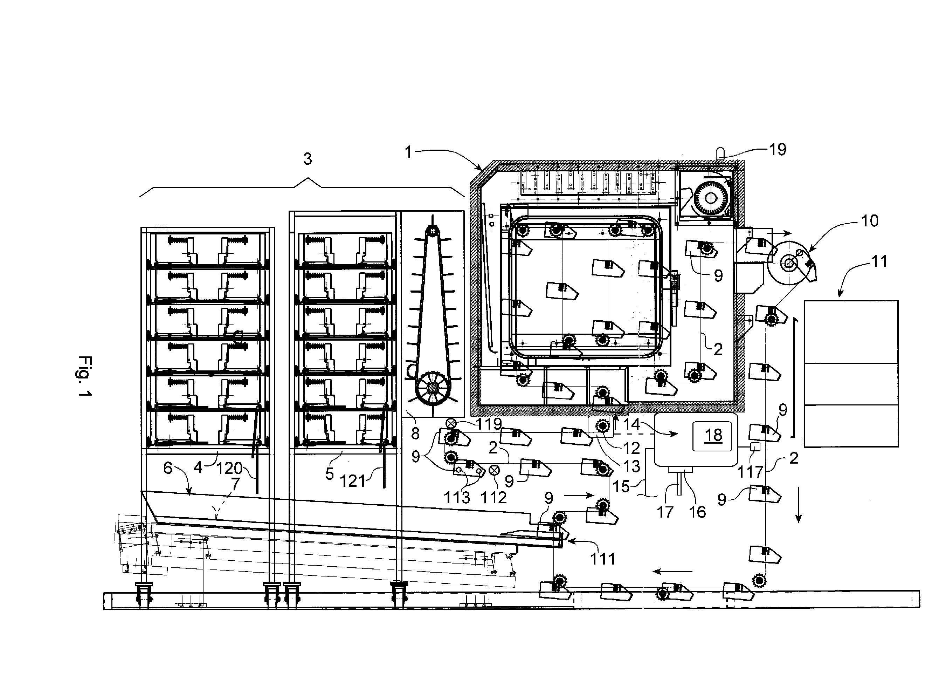

Die in Fig. 1 dargestellte Backvorrichtung umfaßt einen Backofen 1 zum Backen von Backrohlingen oder Teiglingen, welche meist angetaut, aufgetaut oder tiefgefroren und/oder vorgebacken sind und durch eine Transportvorrichtung automatisch dem Backraum des Backofens 1 zugeführt werden. Der Backofen 1 ist thermisch isoliert und weist auf der in Fig. 1 erkennbaren Seite ein Sichtfenster auf. Zur besseren Übersichtlichkeit ist die Seitenwand des Backofens 1 transparent dargestellt. Die Backrohlinge sind in Fig. 1 nicht dargestellt.

Zum Transport der Backrohlinge in den Backofen 1 ist eine Transportvorrichtung vorgesehen, welche ein Paar im Abstand und parallel zueinander umlaufender Förderketten 2 aufweist. Wiederum aus Gründen der Übersichtlichkeit ist der Verlauf der Förderketten 2 in der Fig. 1 nur durch eine dünne Linie eingezeichnet. Zwei Förderketten liegen in der Richtung senkrecht zur Ebene der Fig. 1 hintereinander. Da die Förderketten 2 auch durch den beheizten Backraum des Backofens 1 laufen, sind sie vorzugsweise aus hitzefesten Materialien, insbesondere aus Stahl, hergestellt.

Ferner umfaßt die Backvorrichtung aus Fig. 1 eine Zufuhrvorrichtung 3, welche aus mehreren Elementen besteht. Zum einen sind zwei Beschickungswagen 4 und 5 zu erkennen, auf denen Backrohlinge, insbesondere vorgebackene Brötchen, in verschiedenen Lagen angeordnet sind. Unterhalb der Beschickungswagen 4 und 5 ist eine Wanne 6 angeordnet, deren Bodenfläche eine geneigte Rutschfläche 7 bildet.

Während die Beschickungswagen 4 und 5 Backrohlinge für Brötchen transportieren, die auf die Rutschfläche 7 fallen, ist an der dem Backofen 1 zugewandten Seite des Beschickungswagens 5 ein Vorratsmagazin 8 für längliche Backwaren, insbesondere Baguettes, angeordnet.

Zwischen den Förderketten 2 sind jeweils quer verlaufend Tragmittel 9 angeordnet, von denen die Backrohlinge aufgenommen und in den Backraum des Backofens 1 transportiert werden. In dem Backraum des Backofens 1 verlaufen die zueinander parallelen Transportketten 2 mäanderförmig, so daß die Tragmittel 9 für eine ausreichend lange Zeit innerhalb des Backraums des Backofens 1 verweilen. Die Tragmittel 9 sind nach Art einer Gondel an dem Förderkettenpaar befestigt. Hierzu sind sie um eine quer zum Förderkettenpaar 2 verlaufende Achse schwenkbar angehängt. Aufgrund ihres unterhalb der Schwenkachse liegenden Schwerpunkts verharren sie ohne äußere Einwirkung in der in Fig. 1 dargestellten Position, in der ihre Auflagefläche im wesentlichen waagerecht verläuft oder gegebenenfalls um einen kleinen Winkel zur in Fig. 1 rechten Seite hin nach unten geneigt ist.

Am Austritt aus dem Backraum des Backofens 1 ist eine Abgabestation 10 vorgesehen, an der die fertig gebackenen Backwaren von den Tragmitteln 9 entfernt werden. Die Abgabestation 10 umfaßt auch mehrere Behälter 11, aus der sich die Kunden die fertiggestellten Backwaren entnehmen können. Mittels einer Sortiervorrichtung können die unterschiedlichen von der Zufuhrvorrichtung 3 bereitgestellten Backwaren den verschiedenen Behälter 11 der zugeordnet werden.

Die Stromversorgung für die Backvorrichtung sowie die Datenverarbeitungseinheit, welche die Backvorrichtung steuert, ist in dem in Fig. 1 schematisch unterhalb des Backofens 1 dargestellten Steuerungskasten 14 aufgenommen.

Ferner ist ein Antriebsritzel 12, welches mit der Förderkette 2 kämmt, durch einen Antriebsmotor 13 angetrieben. Der Antriebsmotor 13 treibt an der gegenüberliegenden Seite ein entsprechendes Ritzel in gleicher Drehrichtung an. Der Antriebsmotor 13 ist ebenfalls mit einer Stromversorgung innerhalb des Steuerungskastens 14 verbunden.

Ferner sind in Fig. 1 zwei Datenschnittstellen an dem Steuerungskasten 14 mit der Datenverarbeitungseinheit dargestellt. Eine Datenleitung 15 erlaubt als erste Datenschnittstelle den Datenaustausch über ein fest verkabeltes Datennetzwerk. Ein Datenübertragungsmodul 16, welches mit einer Antenne 17 versehen ist, bildet die zweite Datenschnittstelle und ermöglicht eine berührungslose Datenübertragung über Funk. Derartige Datenübertragungsmodule für verschiedene digitale Geräte sind beispielsweise als blue-tooth-Datenschnittstelle bekannt. Die Datenschnittstellen 15, 16 ermöglichen eine Datenkommunikation zwischen der Datenverarbeitungseinheit in dem Steuerungskasten 14 und den nachfolgend beschriebenen externen Geräten.

Der Steuerungskasten 14 weist an seiner sichtbaren Vorderseite einen berührungsempfindlichen Bildschirm 18 auf. Dieser dient zum einen der Anzeige von bestimmten Zustandsmeldungen oder Signalen. Ferner können über den berührungsempfindlichen Bildschirm 18, auch Touchscreen genannt, Dateneingaben erfolgen. Eine weitere Signalvorrichtung ist oben auf dem Backofen 1 in Form einer Signalleuchte 19 zu erkennen.

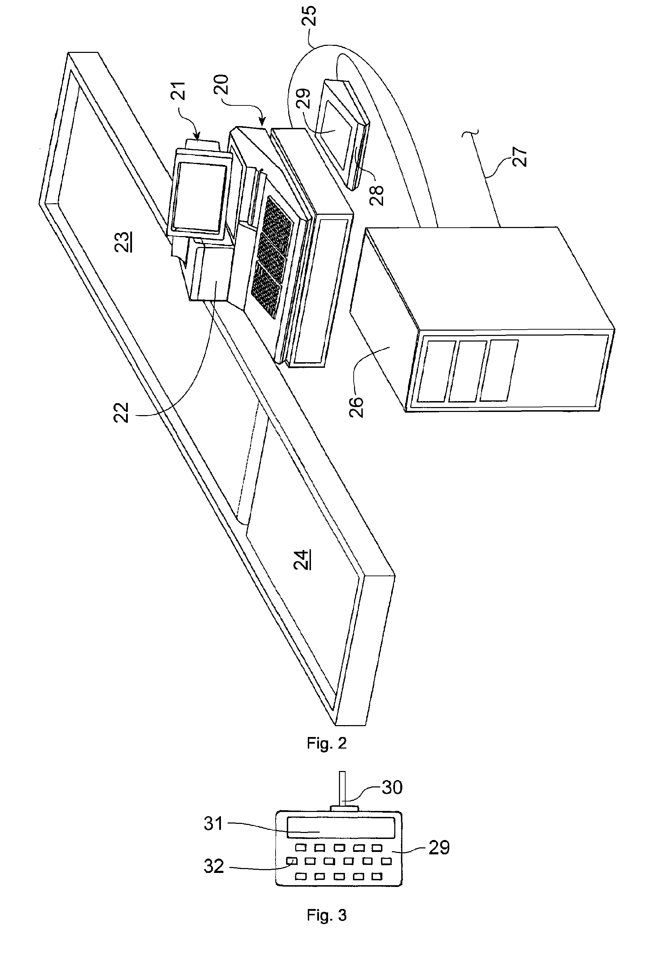

Die Fig. 2 zeigt ein Kassensystem 10, welches mit der Backvorrichtung aus Fig. 1 gekoppelt ist. Das Kassensystem umfaßt eine elektronische Registrierkasse 20 mit einem Anzeigebildschirm 21 und einem Drucker 22 für Kassenbelege. Es ist in herkömmlicher Weise mit einem Laufband 23 und einer Wägeeinheit 24 in Verlängerung des Laufbands 23 gekoppelt. Über die Wägeeinheit 24 können Produkte zum Kassieren abgewogen werden.

Die Registrierkasse 20 ist über eine Datenleitung 25 mit einem Zentralrechner 26 des Kassensystems verbunden. Die räumliche Anordnung des Zentralrechners 26 muß nicht der Darstellung in Fig. 2 entsprechen. Der Zentralrechner 26 kann entfernt von der Registrierkasse 20 angeordnet sein. Auch sind in der Regel in größeren Verkaufsgeschäften mehrere Registrierkassen 20 an dem Zentralrechner 26 angeschlossen.

In Fig. 2 ist ferner eine Datenleitung 27 dargestellt, die mit einer Datenschnittstelle des Zentralrechners 26 verbunden ist. Diese Datenleitung 27 ist mit der Datenleitung 15 in Fig. 1 verbunden. Die Registrierkasse 20 erfaßt die abverkauften Waren anhand ihrer Artikelnummern und speichert die jeweils verkauften Stückzahlen der Waren auf einen Datenspeicher des Zentralrechners 26 ab. Diese Stückzahlen können über die Datenleitungen 27, 15 an die Datenverarbeitungseinheit in dem Steuerungskasten 14 übermittelt werden und in Beziehung zu den dort erfaßten Zahlen der bereitgestellten Backwaren gesetzt werden. Alternativ kann selbstverständlich die Datenverarbeitungseinheit innerhalb des Zentralrechners 26 den Vergleich durchführen.

Wenn die Differenz zwischen den bereitgestellten Backwaren und den verkauften Backwaren einen kritischen Schwellenwert unterschreitet, wird ein Signal abgegeben. Aufgrund des Signals kann das Personal des Verkaufsgeschäfts einen Steuerbefehl eingeben, der die Backvorrichtung der Fig. 1 dazu veranlaßt, eine neue Charge Backwaren zu erstellen.

Die Eingabe des Steuerbefehls kann über den berührungsempfindlichen Bildschirm 18 an dem Steuerungskasten 14 der Backvorrichtung erfolgen. Alternativ oder zusätzlich kann ein Eingabemodul 28 direkt neben der Registrierkasse 20 angeordnet sein. Über das Eingabemodul 28 kann ein Steuerungsbefehl eingegeben werden, der über die Datenleitungen 27, 15 an den Steuerungskasten 14 der Backvorrichtung weitergeleitet wird. Das Eingabemodul 28 weist im vorliegenden Fall einen berührungsempfindlichen Bildschirm 29 auf, der zum einen die Eingabe von Steuerbefehlen ermöglicht und zum anderen Signale der Backvorrichtung wiedergibt, insbesondere, wenn das Nachbacken von Backwaren erforderlich ist.

Weitere Signalmittel, die der Benachrichtigung des Verkaufspersonals dienen, können vorgesehen sein. Beispielsweise kann die Signalleuchte 19 auf dem Backofen 1 dazu verwendet werden, einen erforderlichen Eingabebefehl zu signalisieren.

Schließlich kann ein Funk-Eingabemodul 29 (Fig. 3) zur Eingabe von Eingabebefehlen verwendet werden. Das Funk-Eingabemodul 29 ist ebenfalls mit einer Antenne 30 versehen, welche mit der Antenne 17 an dem Steuerungskasten 14 der Backvorrichtung kommuniziert. Es weist ferner eine Anzeige 31 auf, auf der Betriebszustände der Backvorrichtung angezeigt werden können. Schließlich sind Tasten 32 zur Eingabe von Eingabebefehlen vorgesehen. Selbstverständlich kann auch das Funk-Eingabemodul 29 mit einem berührungsempfindlichen Bildschirm für die Anzeige von Meldungen und die Eingabe von Steuerungsbefehlen versehen sein. Zur Signalwiedergabe kann der Bildschirm des Funk-Eingabemoduls 29 verwendet werden. Das Funk-Eingabemodul 29 kann aber auch ein akustisches Signal abgeben oder mit einem Vibrations-Akkumulator versehen sein, der ein haptisch erfaßbares Vibrationssignal erzeugt. Derartige Vibrations-Akkumulator sind von Mobiltelefonen bekannt und ermöglichen eine Signalwiedergabe an die das entsprechende Gerät tragende Person, ohne daß andere Personen durch störende Geräusche belästigt werden.

Größtmögliche Flexibilität weist das erfindungsgemäße System auf, wenn alle verschiedenen Eingabe- und Signalvorrichtungen, nämlich der berührungsempfindliche Bildschirm 18 am Steuerungskasten 14 der Backvorrichtung, das Eingabemodul 28 an der Registrierkasse 20 und das Funkeingabemodul 29 miteinander kombiniert werden.

Das Bezugszeichen 111 bezeichnet die Übergabestelle, an der die Backrohlinge von der Wanne 6 auf ein Tragmittel 9 übergeben werden. Es ist zu erkennen, daß das Tragmittel 9 nahe an der Wanne von unten nach oben vorbeiläuft. Dabei kämmen Zinken (nicht dargestellt) des Tragmittels 9 mit Schlitzen in der Wanne 6. Die Backrohlinge, die in dem geschlitzten Bereich der Wanne liegen, werden dabei von den Zinken des Tragmittels 9 angehoben.

Am Austritt aus dem Backraum des Backofens 1 ist eine Abgabestation 10 vorgesehen, an der die fertig gebackenen Backwaren von den Tragmitteln 9 entfernt werden.

Ferner ist in Fig. 1 das oben beschriebene Antriebsritzel 12 dargestellt, welches mit der Förderkette 2 kämmt und durch den Antriebsmotor 13 angetrieben wird. In der Praxis kann der Antriebsmotor und das angetriebene Ritzel auch an jeder anderen Stelle der Förderkette 2 vorgesehen sein. Beispielsweise eignet sich auch das im Bereich der Abgabestation 10 dargestellte große Ritzel zum Antreiben der Förderkette 2.

Ein mit dem Steuerungskasten 14 verbundener Bewegungssensor 117 enthält eine Spule und arbeitet induktiv. Jedesmal, wenn ein Tragmittel 9, welches aus Stahlblech besteht, in geringem Abstand an dem Bewegungssensor 117 vorbeiläuft, gibt dieser ein Signal ab, welches über ein Signalkabel zum Steuerungskasten 14 geleitet wird. So kann eine Auswerteelektronik innerhalb des Steuerungskastens 14 den ordnungsgemäßen Betrieb der Förderkette 2 überwachen.

Ferner sind Lichtschranken 112 und 119 in den Bewegungsbahnen der Tragmittel 9 bzw. der Backrohlinge angeordnet, die einer Steuerung und Überwachung der Backvorrichtung dienen. Die Lichtschranke 112 wirkt mit Durchtrittsöffnungen 113 zusammen. Derartige Durchtrittsöffnungen 113 sind an allen Tragmitteln vorhanden, aber ausschließlich an dem Tragmittel 9 hinter der Lichtschranke 112 eingezeichnet. Sobald das Tragmittel 9 in den Bereich der Lichtschranke 112 kommt, wird die Lichtschranke 112 unterbrochen und das Signal des Empfängers der Lichtschranke 112 verändert sich. Dieses Signal wird einer Auswerteeinheit in dem Steuerungskasten 14 zugeführt, welche dem Signal entnimmt, daß ein Tragmittel 9 an der Lichtschranke vorbeibewegt wurde. Wenn sich das Tragmittel 9 weiterbewegt, empfängt bei einem leeren Tragmittel der Empfänger an den beiden Durchtrittsöffnungen 113 wieder das Licht der Lichtschranke 112. Ist das Tragmittel 9 befüllt, so bleibt der Empfänger an mindestens einer der Durchtrittsöffnungen 113 dunkel.

Das Signal der Lichtschranke 112 gibt also sowohl den Durchlauf eines Tragmittels 9 wieder als auch das Aufliegen eines Backrohlings auf dem Tragmittel 9.

Wenn beim weiteren Transport durch die Förderkette 2 ein leeres Tragmittel 9 unter die Abwurföffnung des Vorratskarussells 8 transportiert wird, kann ein Abwurf eines Backrohlings aus diesem Vorratskarussell 8 ausgelöst werden. Dabei ermittelt die Lichtschranke 119 unterhalb des Vorratskarussells 8, ob tatsächlich ein Backrohling auf das Tragmittel 9 fällt. Ist dies nicht der Fall, wird durch die Steuerungselektronik im Steuerungskasten 14 das Vorratskarussell erneut aktiviert, bis tatsächlich ein Backrohling auf das Tragmittel 9 fällt. Die Vortriebsgeschwindigkeit der Tragmittel ist aufgrund der Tatsache, daß sie mehrere Minuten in dem Backraum des Backofens 1 verweilen, hinreichend klein, so daß mehrere Abwurfvorgänge durch das Vorratskarussell 8 durchgeführt werden können, während sich das Tragmittel 9 unterhalb der Abwurföffnung befindet.

Die beschriebene Backvorrichtung ist über die Steuerungseinheit 14 derart programmierbar, daß sie bestimmte Chargen Backwaren herstellt. Bei jedem der beiden Beschickungswagen 4 und 5 sind sechs übereinanderliegende Fächer vorgesehen, deren Fachböden einzeln und nacheinander geöffnet werden können. In Fig. 1 sind jeweils die unteren zwei rechten Fachböden 120 des linken Beschickungswagens 4 und die unteren zwei rechten Fachböden 121 des rechten Beschickungswagens 5 geöffnet dargestellt. Bei dem großen Beschickungswagen 4 sind auf jedem Fachboden 120, der sich über die Hälfte des Faches erstreckt, fünfunddreißig Brötchen angeordnet. Bei dem kleinen Beschickungswagen 5, der beispielsweise für Vollkornbrötchen vorgesehen ist, sind auf jedem Fachboden 121 zwanzig Backrohlinge angeordnet. Die Backrohlinge für die Baguettes aus dem Vorratskarussell 8 können einzeln jeweils dann zugeführt werden, wenn festgestellt wird, daß ein leeres Tragmittel 9 sich unterhalb der Abwurföffnung des Vorratskarussells 8 befindet.

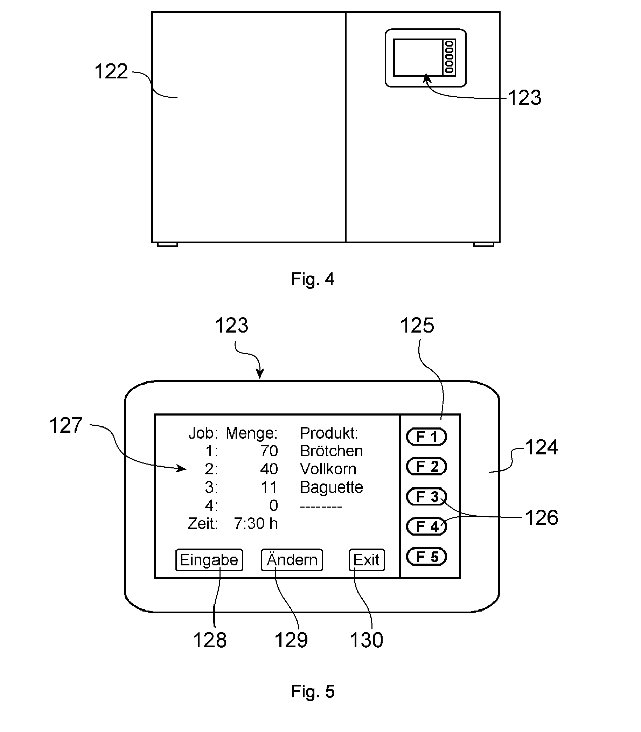

Die Fig. 4 zeigt eine Seitenansicht des Gehäuses 122 der Backvorrichtung aus Fig. 1. Ein berührungsempfindlicher Bildschirm 123, auch Touchscreen genannt, ist für die Eingabe von Steuerbefehlen vorgesehen, die an die Steuerungseinheit 14 (Fig. 1) weitergeleitet werden. Der berührungsempfindliche Bildschirm 123 ist in der Fig. 5 vergrößert dargestellt. Er umfaßt einen Rahmen 124, eine Funktionstastenleiste 125 mit einzelnen Funktionstasten 125 und ein berührungsempfindliches Eingabefeld 127, bei dem über die elektrische Leitfähigkeit die Berührung mit einem Stift oder mit einem Finger festgestellt wird. Das Eingabefeld 127 ist transparent, und dahinter ist ein TFT-Bildschirm angeordnet, der in Abhängigkeit von der Eingabe angesteuert wird. Die Datenverarbeitungseinheit, welche die Eingabe über das Eingabefeld 127 sowie die Anzeige über den dahinter liegenden Anzeigemonitor steuert, ist ebenfalls in dem Steuerungskasten 14 aufgenommen.

In der Fig. 5 ist auf dem Bildschirm ein typisches Backprogramm für einen Nachtback-Auftrag wiedergegeben. Es sollen siebzig normale Brötchen, vierzig Vollkornbrötchen und elf Baguettes hergestellt werden. Hierfür sind zwei Fachböden 120 des großen Beschickungswagens 4 aus Fig. 1 zu öffnen und die dadurch herausfallenden Backrohlinge der Brötchen zu backen und an der Abgabestation 10 einem entsprechenden Entnahmebehälter zuzuführen. Nach Beendigung dieser Backaufgabe öffnen zwei Fachböden 121 des kleinen Beschickungswagens 5, der mit Vollkornbrötchen bestückt ist. Sobald über die Lichtschranke 112 festgestellt wird, daß die Tragmittel keine Vollkornbrötchen mehr tragen, wird das Vorratskarussell dazu veranlaßt, Backrohlinge für Stangenweißbrote (Baguettes) abzuwerfen.

Auf dem berührungsempfindlichen Eingabefeld 127 sind durch die Anzeige bestimmte Bereiche 128 - 130 abgegrenzt, welche spezifischen Eingabefunktionen zugeordnet sind. Hierdurch kann der eingegebene Back-Job geändert werden.

Ebenfalls können die Funktionstasten 126 zur Änderung des Back-Jobs eingesetzt werden.

Die Startzeit für den Back-Job ist auf 7:30 Uhr gesetzt. Bis zur üblichen Öffnungszeit eines Lebensmittel-Verkaufsgeschäfts um 9:00 Uhr verbleiben somit 90 Minuten zum Aufheizen des Backofens und Abbacken der in dem Back-Job zusammengefaßten Backaufträge. Wenn das Verkaufsgeschäft um 9:00 Uhr öffnet, stehen die am Vorabend abgeforderten Backwaren zur Entnahme durch die Kunden bereit. Am Vorabend muß lediglich - wie beschrieben - der Back-Job eingegeben werden und die erforderliche Menge Backrohlinge über die Zufuhrvorrichtung 3 der Backvorrichtung bereitgestellt werden.

Eine Funktionstaste 126, z.B. die Funktionstaste F5, kann dem Abschalten der Backvorrichtung in einen Bereitschaftszustand dienen. Hierbei werden alle Antriebsmotoren und alle Heizeinrichtungen über den Steuerungskasten 14 von der Stromzufuhr getrennt. Lediglich die elektronische Datenverarbeitungseinheit innerhalb der Steuerungsvorrichtung wird so weit mit Strom versorgt, daß ihr Zeitmesser (Timer) überwacht wird und um 7:30 h das Backprogramm aktiviert. In diesem Moment wird automatisch die Backvorrichtung eingeschaltet und nach Aufheizen des Backofens 1 die Zufuhrvorrichtung 3 aktiviert.

Bezugszeichenliste:
- 1: Backofen
- 2: Förderkette, Transportvorrichtung
- 3: Zufuhrvorrichtung
- 4: Beschickungswagen
- 5: Beschickungswagen
- 6: Wanne
- 7: Rutschfläche
- 8: Vorratskarussell
- 9: Tragmittel
- 10: Abgabestation
- 11: Behälter
- 12: Antriebsritzel
- 13: Antriebsmotor
- 14: Steuerungskasten, Steuerungseinheit, Datenverarbeitungseinheit
- 15: Datenleitung, Datenschnittstelle
- 16: Datenübertragungsmodul, Datenschnittstelle
- 17: Antenne
- 18: berührungsempfindlicher Bildschirm
- 19: Signalleuchte, Signalmittel
- 20: Registrierkasse
- 21: Bildschirm
- 22: Drucker
- 23: Förderband
- 24: Wägeeinheit
- 25: Datenleitung
- 26: Zentralrechner
- 27: Datenleitung
- 28: Eingabemodul
- 29: tragbares Funk-Eingabemodul
- 30: Antenne

- 31: Anzeige
- 32: Taste
- 111: Übergabestelle
- 112: Lichtschranke
- 113: Durchtrittsöffnung
- 117: Bewegungssensor
- 119: Lichtschranke
- 120: Fachboden
- 121: Fachboden
- 122: Gehäuse
- 123: berührungsempfindlicher Bildschirm
- 124: Rahmen
- 125: Funktionstastenleiste
- 126: Funktionstasten
- 127: Eingabefeld
- 128: Eingabebereich
- 129: Eingabebereich
- 130: Eingabebereich

## Patentansprüche

1. Verfahren zur Steuerung einer automatischen Backvorrichtung in einem Verkaufsgeschäft, mit einem Backofen (1), einer Zufuhrvorrichtung (3) für die Zufuhr von Backrohlingen und einer Transportvorrichtung (2) für den Transport der Backrohlinge von der Zufuhrvorrichtung (3) durch den Innenraum des Backofens (1) zu einer Abgabestation (10), an der die fertigen Backwaren für Kunden bereitgestellt werden, **dadurch gekennzeichnet, daß** eine Datenverarbeitungseinheit (14) die Menge der bereitgestellten Backwaren erfaßt und über ein Datennetz von dem Kassensystem des Verkaufsgeschäfts die Anzahl der verkauften Backwaren empfängt und durch Vergleich dieser Werte ein Nachbacken durch die Backvorrichtung veranlaßt.

2. Verfahren nach Anspruch 1, **dadurch gekennzeichnet, daß** aufgrund des Vergleichs ein Signal erzeugt wird, welches das Personal dazu veranlaßt, die Backvorrichtung zu aktivieren.

3. Verfahren nach Anspruch 1, **dadurch gekennzeichnet, daß** aufgrund des Vergleichs ein Signal an die Backvorrichtung geleitet wird, welches die Backvorrichtung aktiviert.

4. Verfahren nach einem der Ansprüche 2 oder 3, **dadurch gekennzeichnet, daß** durch die Aktivierung der Backvorrichtung eine vorbestimmte Anzahl von Backwaren gebacken wird.

5. Verfahren nach einem der vorangehenden Ansprüche, **dadurch gekennzeichnet, daß** das Nachbacken veranlaßt wird, wenn die Anzahl der verkauften Backwaren der Anzahl der bereitgestellten Backwaren entspricht.

6. Verfahren nach einem der Ansprüche 1 bis 4, **dadurch gekennzeichnet, daß** das Nachbacken veranlaßt wird, wenn die Anzahl der verkauften Backwaren um einen bestimmten Schwellenwert kleiner ist als die Anzahl der bereitgestellten Backwaren.

7. Verfahren nach Anspruch 6, **dadurch gekennzeichnet, daß** die Datenverarbeitungseinheit (14) die Anzahl der verkauften Backwaren pro Zeiteinheit erfaßt und den Schwellenwert unter Berücksichtigung dieses Werts bestimmt.

8. Verfahren nach Anspruch 6 oder 7, **dadurch gekennzeichnet, daß** die Datenverarbeitungseinheit (14) mittels einer Personenzählvorrichtung die Anzahl der in dem Verkaufsgeschäft befindlichen Kunden erfaßt und den Schwellenwert unter Berücksichtigung dieser Anzahl bestimmt.

9. Verfahren nach einem der vorangehenden Ansprüche, **dadurch gekennzeichnet, daß** die Zufuhrvorrichtung (3) mehrere verschiedene Backwaren zuführt und daß die Datenverarbeitungseinheit (14) die Menge jeder der verschiedenen bereitgestellten Backwaren erfaßt und über ein Datennetz von dem Kassensystem des Verkaufsgeschäfts die Anzahl jeder der verschiedenen verkauften Backwaren empfängt und auf der Grundlage des Vergleichs dieser Werte für jede der verschiedenen Backwaren ein Nachbacken durch die Backvorrichtung veranlaßt.

10. Automatische Backvorrichtung für ein Verkaufsgeschäft, mit einem Backofen (1), einer Zufuhrvorrichtung (3) für die Zufuhr von Backrohlingen und einer Transportvorrichtung (2) für den Transport der Backrohlinge von der Zufuhrvorrichtung (3) durch den Innenraum des Backofens (1) zu einer Abgabestation (10), an der die fertigen Backwaren für Kunden bereitgestellt werden, **dadurch gekennzeichnet, daß** sie eine Datenverarbeitungseinheit (14) mit einer Datenschnittstelle (15,16) für den Austausch von Daten mit einem Kassensystem des Verkaufsgeschäfts aufweist.

11. Backvorrichtung nach Anspruch 10, **dadurch gekennzeichnet, daß** sie ein Signalmittel umfaßt.

12. Backvorrichtung nach Anspruch 11, **dadurch gekennzeichnet, daß** das Signalmittel an mindestens einem der folgenden Orte angeordnet ist:
- dem Backofen- mindestens einer Registrierkasse des Kassensystems- in einem tragbaren Modul, das über eine Funk-Datenverbindung mit der Backvorrichtung verbunden ist.

13. Backvorrichtung nach Anspruch 11 oder 12, **dadurch gekennzeichnet, daß** sie mindestens eins der folgenden Signalmittel umfaßt:
- Anzeigebildschirm (18,31) zur Wiedergabe einer Warnmeldung;-Signalleuchte (19);- Tongenerator zur Abgabe eines Signaltons;- tragbares Vibrationsmittel zur Erzeugung eines Vibrationsalarms.

14. Backvorrichtung nach einem der Ansprüche 10 bis 13, **dadurch gekennzeichnet, daß** sie ein Mittel zur Eingabe von Steuerbefehlen umfaßt.

15. Backvorrichtung nach Anspruch 14, **dadurch gekennzeichnet, daß** das Eingabemittel an mindestens einem der folgenden Orte angeordnet ist:
- dem Backofen- mindestens einer Registrierkasse des Kassensystems- in einem tragbaren Modul (29), das über eine Funk-Datenverbindung mit der Backvorrichtung verbunden ist.

16. Backvorrichtung nach Anspruch 14 oder 15, **dadurch gekennzeichnet, daß** sie mindestens eins der folgenden Eingabemittel umfaßt:
- berührungsempfindlicher Bildschirm;- Tastatur.

17. Backvorrichtung nach einem der Ansprüche 11 bis 16, **dadurch gekennzeichnet, daß** das Signalmittel und das Eingabemittel in einem gemeinsamen Gehäuse angeordnet sind.

18. Verfahren zur Steuerung einer automatischen Backvorrichtung in einem Verkaufsgeschäft, mit einem Backofen (1), einer Zufuhrvorrichtung (3) für die Zufuhr von Backrohlingen und einer Transportvorrichtung (2) für den Transport der Backrohlinge von der Zufuhrvorrichtung (3) durch den Innenraum des Backofens (1) zu einer Abgabestation (10), an der die fertigen Backwaren für Kunden bereitgestellt werden, **dadurch gekennzeichnet, daß** die Backvorrichtung über eine Steuerungseinheit (14) programmiert wird, so daß sie zu einem bestimmten Zeitpunkt dazu veranlaßt wird eine bestimmte Menge mindestens einer bestimmen Backware zu backen und in der Abgabestation (10) bereitzustellen.

19. Verfahren nach Anspruch 18, **dadurch gekennzeichnet, daß** die Zufuhrvorrichtung (3) für die Zufuhr mehrerer verschiedener Backwaren ausgelegt ist, die nach dem Durchlaufen des Backofens (1) in verschiedenen Sektionen der Abgabestation (10) bereitgestellt, wobei die Steuerungseinheit (14) derart programmiert wird, daß die Backvorrichtung jeweils bestimmte Mengen verschiedener Backwaren bäckt und in den jeweiligen verschiedenen Sektionen der Abgabestation (10) bereitstellt.

20. Verfahren nach Anspruch 18 oder 19, **dadurch gekennzeichnet, daß** der Zeitpunkt einen bestimmten Zeitraum vor der Öffnung des Verkaufsgeschäfts gewählt wird, so daß bis zur Öffnung des Verkaufsgeschäfts die bestimmte(n) Menge(n) einer oder mehrerer Backware(n) in der Abgabestation (10) bereitgestellt sind.

21. Verfahren nach Anspruch 20, **dadurch gekennzeichnet, daß** innerhalb des Zeitraums der Backofen (1) vorgeheizt, die Zufuhrvorrichtung (3) und die Transportvorrichtung (2) aktiviert, der die Backwaren durch den Backofen (1) transportiert und die Abgabestation (10) befüllt wird.

22. Verfahren nach einem der vorangehenden Ansprüche 18 bis 21, **dadurch gekennzeichnet, daß** in der Steuerungseinheit (14) eine festgelegte Kombination von Mengenangaben für die verschiedenen Backwaren abgespeichert sind.

23. Verfahren nach einem der vorangehenden Ansprüche 18 bis 22, **dadurch gekennzeichnet, daß** in die Steuerungseinheit (14) eine Kombination von Mengenangaben für die verschiedenen Backwaren manuell eingebbar ist.

24. Verfahren nach vorangehenden Ansprüche 18 bis 23, **dadurch gekennzeichnet, daß** in der Steuerungseinheit (14) die jeweils abgerufene Kombination von Mengenangaben für die verschiedenen Backwaren in der Steuerungseinheit (14) abgespeichert und statistisch ausgewertet wird.

25. Verfahren nach Anspruch 24, **dadurch gekennzeichnet, daß** die am häufigsten gewählte Kombination von Mengenangaben für die verschiedenen Backwaren über die Steuerungseinheit (14) abrufbar ist.

26. Verfahren nach Anspruch 25, **dadurch gekennzeichnet, daß** die durchschnittlich gewählte Kombination von Mengenangaben für die verschiedenen Backwaren über die Steuerungseinheit (14) abrufbar ist.

27. Verfahren nach Anspruch 24, **dadurch gekennzeichnet, daß** die am häufigsten vor der Öffnung des Verkaufsgeschäfts gewählte Kombination von Mengenangaben für die verschiedenen Backwaren über die Steuerungseinheit (14) abrufbar ist.
